# FASCICULE DE BREVET EUROPEEN

(11) **EP 3 212 881 B1**
(45) Date de publication et mention de la délivrance du brevet: **05.02.2020**
(21) Numéro de dépôt: 15798521.9
(22) Date de dépôt: 29.10.2015
(51) Int. Cl.: E21B 36/00, E21B 41/02, E21B 43/017

(54) **PROCÉDÉ DE GESTION DU CHAUFFAGE DE FLUIDES CIRCULANT DANS UN RÉSEAU DE CONDUITES SOUS-MARINES**
VERFAHREN ZUR VERWALTUNG DER BEHEIZUNG VON FLÜSSIGKEITSSTRÖMEN DURCH EIN NETZWERK AUS UNTERWASSERROHRLEITUNGEN
METHOD FOR MANAGING THE HEATING OF FLUIDS FLOWING THROUGH A NETWORK OF SUBMARINE PIPELINES

(30) Priorité: 31.10.2014 FR 1460507
(43) Date de publication de la demande: 06.09.2017
(73) Titulaire: SAIPEM S.A., 78180 Montigny-le-Bretonneux (FR)
(72) Inventeur: SETTOUTI, Narimane, F-75015 Paris (FR); MUGUERRA, Philippe, F-78210 Saint Cyr l'Ecole (FR); SPUDIC, Damien, F-92500 Rueil-Malmaison (FR)
(74) Mandataire: Cabinet Beau de Loménie
(86) Numéro de dépôt international: PCT/FR2015/052918
(87) Numéro de publication internationale: WO 2016/066967

(56) Documents cités:
- US-A- 5 027 842
- US-A1- 2012 031 621
- US-A1- 2013 098 625
- US-A1- 2013 220 996
- US-A1- 2014 305 613
- US-B1- 6 371 693
- M-K Decrin ET AL: "Innovative flow assurance strategies for long tie- back developments in deep waters", , 2 décembre 2010 (2010-12-02), pages 1-11, XP055200799, Extrait de l'Internet: URL:http://www.maximizerecovery.com/li/inn ovative-flow-assurance-strategies-for-long -tieback-developments-in-deep-waters [extrait le 2015-07-07]

## Description

### Arrière-plan de l'invention

La présente invention se rapporte au domaine général des conduites sous-marines reposant au fond de la mer et assurant une liaison entre des puits de production d'hydrocarbures sous-marins, notamment de pétrole et de gaz, et une installation de surface, par exemple une unité flottante de production, de stockage et de déchargement.

Dans un même champ de production d'hydrocarbures offshore, il est courant d'exploiter plusieurs puits qui peuvent être séparés les uns des autres de plusieurs kilomètres, voire dizaines de kilomètres. Les fluides issus de ces différents puits doivent être collectés par des conduites sous-marines posées au fond de la mer et transférés par des conduites de liaison fond/surface vers une installation de surface, par exemple un navire ou un point de collecte terrestre, qui va les recueillir pour les stocker (et éventuellement les traiter).

Par ailleurs, du fait de leur extraction à une grande profondeur dans le sous-sol, les fluides (pétrole et gaz) issus des puits de production d'hydrocarbures sous-marins sortent à une température relativement élevée au niveau du fond de la mer (typiquement de l'ordre de 70°C). L'eau de mer étant généralement froide, surtout aux grandes profondeurs où elle est typiquement de 4°C, si aucune disposition n'est prise pour conserver la chaleur des fluides en sortie des puits de production, ceux-ci vont se refroidir progressivement en parcourant les kilomètres de conduites sous-marines. Or, ces fluides contiennent divers composés chimiques pour lesquels un refroidissement fait apparaître des phénomènes gênants pour le maintien de bonnes conditions de circulation.

Ainsi, les molécules de gaz, notamment le méthane, se combinent aux molécules d'eau pour former, à certaines conditions de pression et de température, des cristaux d'hydrates. Ces derniers peuvent coller aux parois, s'y agglomérer et conduire à la formation de bouchons capables de bloquer la conduite sous-marine. De même, la solubilité dans le pétrole des composés à haut poids moléculaires, comme les paraffines ou les asphaltènes, diminue lorsque la température baisse, ce qui donne naissance à des dépôts solides capables eux-aussi de bloquer la conduite sous-marine.

L'une de ces solutions connues pour tenter de remédier à ces problèmes consiste à isoler thermiquement les conduites sous-marines afin de conserver autant que possible la chaleur initiale des fluides transportés. Plusieurs technologies sont disponibles à cet effet, dont par exemple la mise en œuvre de conduites coaxiales comprenant une conduite interne véhiculant les fluides et une conduite externe coaxiale à la précédente en contact avec le milieu sous-marin, l'espace annulaire entre ces conduites interne et externe étant rempli d'un matériau d'isolation thermique ou encore vidé de tout gaz.

Cependant, cette solution d'isolation thermique des conduites sous-marines ne permet au mieux que de ralentir le refroidissement inéluctable des fluides transportés. Notamment, si la distance à parcourir au fond de l'eau est trop importante, ou si le débit de fluide est ralenti voire stoppé pour un certain temps, la température des fluides peut descendre en-dessous d'un seuil critique.

Une autre solution connue pour éviter la formation de bouchons dans les conduites sous-marines consiste à nettoyer fréquemment ces dernières en faisant circuler à l'intérieur de celles-ci des racleurs (ou « pig » en anglais) qui enlèvent des parois les éventuels dépôts.

Toutefois, le raclage d'une conduite sous-marine ne peut au mieux qu'éliminer des dépôts de tailles relativement modestes pour éviter tout risque de voir le racleur se coincer dans la conduite. Aussi, malgré le recours au raclage, cette solution nécessite quand même d'isoler thermiquement les conduites pour limiter autant que possible la formation de dépôts solides à l'intérieur de celles-ci.

Encore une autre solution connue consiste à chauffer les conduites sous-marines sur toute leur longueur grâce à un ou plusieurs câbles électriques qui sont enroulés autour des conduites pour les chauffer par effet Joule. Cette solution qui est appelée « chauffage tracé » (ou « heat tracing » en anglais) permet de maintenir les fluides transportés dans les conduites sous-marines à une température supérieure à un seuil critique sur tout leur trajet depuis le puits de production jusqu'à l'installation de surface.

Cette dernière solution présente d'évidents problèmes liés à l'installation de tels câbles électriques de chauffage sur toute la longueur des conduites sous-marines, avec les coûts importants que cela représente en termes d'installation. Par ailleurs, le chauffage tracé est basé sur la continuité de l'installation tout le long des conduites sous-marines. Or, si cette continuité venait à être rompue pour une raison ou une autre à un endroit des conduites, toute l'installation se trouverait hors service. Cette contrainte impose donc de considérer ce type de chauffage uniquement pour les phases dites de préservation des fluides transportés, et non pour les phases opérationnelles de fonctionnement.

On connait aussi du document US 2013/098625 un procédé de chauffage consistant à recourir à des stations mobiles de chauffage par induction pour chauffer localement des conduits d'un réseau de transport d'hydrocarbures. On connait du document US 2014/305613 une station de chauffage qui est montée en parallèle de la conduite à chauffer.

### Objet et résumé de l'invention

La présente invention a donc pour but principal de proposer un procédé de gestion du chauffage de fluides circulant dans un réseau de conduites sous-marines qui ne présente pas les inconvénients précités.

Ce but est atteint grâce à un procédé de gestion du chauffage selon la revendication 1.

Le procédé selon l'invention est remarquable en ce qu'il assure une gestion locale du chauffage des fluides transportés par une ou plusieurs stations de chauffage amovibles qui sont activées uniquement lorsque la situation l'exige. Ces stations de chauffage sont locales et peuvent être positionnés en un ou plusieurs points stratégiques du réseau de conduites sous-marines afin d'assurer un niveau de température des fluides transportés suffisant sur une très grande longueur.

A titre d'exemple, sur un réseau de conduites sous-marines de 80km de long, et dans le cas d'une gestion du chauffage qui exigerait en phase de fonctionnement normal un chauffage continu des conduites, ces stations de chauffage pourraient être raccordées tous les 30km environ le long des conduites. De même, le procédé selon l'invention peut être utilisé en pied d'un « riser » (c'est-à-dire une conduite utilisée pour relier le fond de la mer avec une installation de surface) dans les cas des champs ultra profonds (profondeur supérieure à 2000m) pour lesquels la température des fluides transportés va fortement décroître suite à la détente de Joule Thomson qu'ils subissent (10°C tous les 1000m). Dans cette application, le chauffage selon l'invention permet d'apporter l'énergie thermique qui est perdue lors de la remontée des fluides.

De plus, les stations de chauffage du procédé selon l'invention sont entièrement amovibles et peuvent donc être aisément déconnectées des conduites sous-marines pour être déplacées en un autre endroit du réseau de conduites ou pour subir une opération de maintenance ou de réparation. Ces stations de chauffage peuvent également être intégrées à des réseaux de conduites existants car leur raccordement sur une conduite sous-marine ne nécessite pas d'importantes modifications du réseau. En cas de défaillance d'une station de chauffage, le reste de la ligne de fonctionnement ne s'en trouvera pas affecté (les autres stations de chauffage ne seront pas mises hors service).

Le procédé de gestion du chauffage de fluides selon l'invention présente ainsi une grande facilité d'installation sur un réseau de conduites (ces stations de chauffage sont amovibles et indépendantes les unes des autres), une très grande souplesse d'utilisation (elles peuvent être utilisées en phase de fonctionnement normal, en phase de préservation des fluides, etc.), et un faible coût d'installation et d'entretien. Le procédé selon l'invention permet encore de pouvoir transférer le réchauffage des fluides qui existe habituellement sur l'installation de surface pour le positionner sous la mer, ce qui permet ainsi un gain de place sur l'installation de surface.

Dans cette réalisation dite à « double boucle », les stations de chauffage permettent d'assurer, en phase de fonctionnement normal, un niveau de température des fluides transportés suffisant sur une très grande longueur afin d'éviter la formation de dépôts dans les conduites sous-marines.

De plus, en phase de préservation, le fluide traité est injecté dans la boucle aval pour purger les conduites principales de tous fluides provenant du puits de production et éviter ainsi toute formation de dépôts dans cette boucle aval. Dans la boucle amont, les stations de chauffage activées continuent d'assurer un chauffage des fluides transportés pour éviter leur figeage à froid. Par rapport au mode de réalisation précédemment décrit, seule une boucle est purgée des fluides qu'elle contient, ce qui limite la quantité nécessaire de fluide traité. Cette configuration permet ainsi de simplifier le raccordement à une installation de surface existante pour lesquelles les modifications sont généralement difficiles à réaliser.

Toujours dans cette réalisation dite à double boucle, en phase de redémarrage du réseau de conduites sous-marines faisant suite à une phase de préservation, le procédé peut comprendre :
l'arrêt de l'injection dans les conduites principales de la boucle aval de circulation de fluides d'un fluide traité ;
la réouverture des conduites principales entre les conduites de raccordement ;
la fermeture des deux conduites de raccordement pour fusionner entre elles les boucles amont et aval de circulation de fluides ;
l'injection de méthanol dans au moins l'une des conduites de raccordement pour prévenir la formation d'hydrates dans celle-ci ; et
la réouverture progressive des conduites secondaires pour redémarrer la production.

Dans une variante de réalisation également à double boucle, en phase de préservation du réseau de conduites sous-marines, le procédé peut comprendre l'arrêt des stations de chauffage et la dépressurisation de la boucle amont de circulation de fluides pour éviter la formation d'hydrates dans cette boucle amont.

Au moins l'une des conduites sous-marines peut être raccordée à au moins une station de chauffage. Pour améliorer la disponibilité de la ligne de production, il est possible de créer une redondance avec au moins l'une des conduites sous-marines qui est raccordée à au moins deux stations de chauffage installées en série ou en parallèle. Avec une telle redondance, une station de chauffage est capable d'assurer seule le chauffage voulu. En temps normal, une seule de ces deux stations de chauffage est utilisée ou les deux le sont à mi-puissance. Si l'une des stations de chauffage est retirée, l'autre station prend le relais.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- les figures 1A à 1C sont des vues schématiques d'un exemple de mise en œuvre d'un procédé de gestion de chauffage selon un premier mode de réalisation dit à simple boucle, ne faisant pas partie de l'étendue de la protection ;
- les figures 2A à 2D sont des vues schématiques d'un exemple de mise en œuvre du procédé de l'invention selon un mode de réalisation dit à double boucle ;
- les figures 3A à 3D sont des vues schématiques d'un exemple de mise en œuvre du procédé de l'invention selon un autre mode de réalisation dit à double boucle ;
- les figures 4A à 4D sont des vues schématiques d'un exemple de mise en œuvre d'un procédé de gestion de chauffage selon un mode de réalisation dit à double boucle ;
- la figure 5 est une vue schématique d'un exemple de mise en œuvre d'un procédé de gestion de chauffage selon un mode de réalisation dit à boucle hybride ne faisant pas partie de l'étendue de la protection ; et
- les figures 6 à 9 montrent différentes caractéristiques des stations de chauffage pour la mise en œuvre du procédé selon l'invention.

### Description détaillée de l'invention

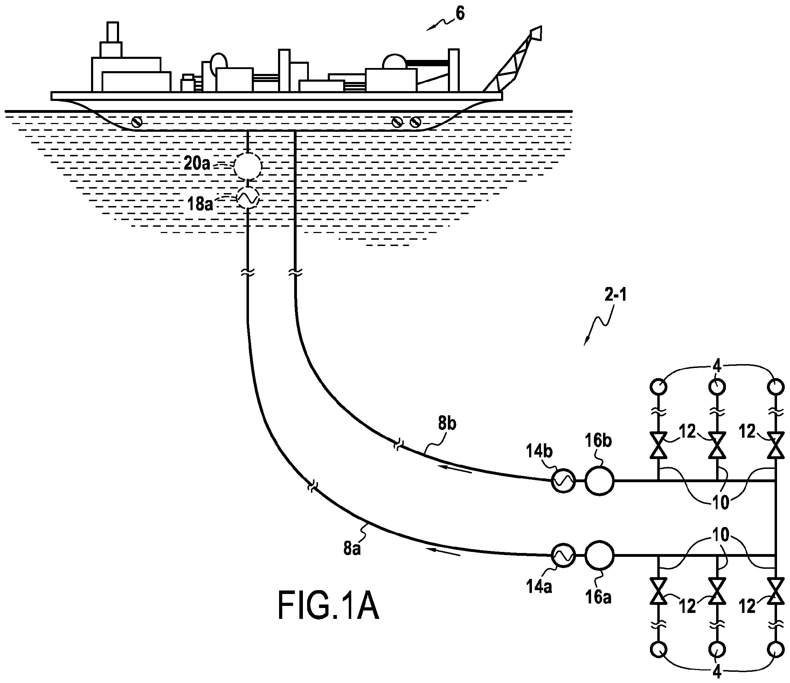

L'invention s'applique à tout réseau de conduites sous-marines assurant une liaison entre au moins un puits de production d'hydrocarbures sous-marin et une installation de surface tel que le réseau 2-1 représenté sur les figures 1A à 1C.

Un tel réseau 2-1 a pour but de transporter les hydrocarbures (pétrole et gaz) provenant d'un ou plusieurs puits de production sous-marins 4 pour les acheminer vers une installation de surface 6 qui peut être, comme représenté sur la figure 1A, une unité flottante de production, de stockage et de déchargement (également appelée FPSO pour « Floating Production Storage and Offloading » en anglais). Alternativement, les hydrocarbures provenant des puits de production 4 pourraient être acheminés directement à une installation de surface côtière grâce à de très longues conduites.

Dans le premier mode de réalisation représenté sur les figures 1A à 1C, le réseau 2-1 comprend deux conduites sous-marines principales 8a, 8b qui sont raccordées chacune à l'installation de surface 6 et qui sont reliées entre elles au fond de la mer de sorte à former une boucle de circulation de fluides (on parle de réseau à boucle conventionnelle). A titre d'exemple, la longueur cumulée de ces deux conduites principales peut atteindre 160km.

Le réseau 2-1 comprend également une pluralité de conduites sous-marines secondaires 10 (au nombre de 6 dans l'exemple illustré) qui permettent chacune de relier un puits de production sous-marin 4 aux deux conduites principales 8a, 8b. Ces conduites secondaires 10 sont chacune équipées d'une vanne 12 pilotée directement depuis l'installation de surface 6.

Le procédé selon l'invention consiste à assurer localement un chauffage des fluides transportés dans les conduites principales 8a, 8b du réseau 2-1 ainsi décrit afin de maintenir les fluides transportés à une température supérieure à un seuil critique permettant d'éviter la formation de dépôts à l'intérieur desdites conduites.

A cet effet, le procédé prévoit le raccordement de manière amovible d'au moins une station de chauffage de fluides à une conduite sous-marine et le pilotage de ladite station de chauffage en fonction du mode de fonctionnement du réseau de conduites.

Ainsi, dans le premier mode de réalisation représenté sur les figures 1A à 1C, chaque conduite principale 8a, 8b est équipée d'au moins une station de chauffage 14a, 14b des fluides transportés, ces stations de chauffage étant commandées depuis l'installation de surface 6 et éventuellement couplées chacune à une pompe 16a, 16b.

Le fonctionnement des stations de chauffage 14a, 14b n'est pas détaillé ici. On pourra par exemple recourir à des stations de chauffage fonctionnant sur le principe de l'induction électromagnétique grâce à un solénoïde alimenté en courant électrique depuis l'installation de surface et enroulé autour de la conduite correspondante pour chauffer celle-ci par induction et par conséquence les fluides transportés par conduction. Alternativement, les stations de chauffage peuvent fonctionner sur le principe des micro-ondes, par des réactions chimiques ou par tout autre procédé connu de chauffage de tout type de fluides circulant dans une conduite sous-marine.

De préférence, les stations de chauffage 14a, 14b présentent un faible encombrement au sol et peuvent être aisément déplacées sur le réseau en fonction des besoins ponctuels de chauffage. De plus, ces stations de chauffage peuvent être facilement raccordées à des réseaux existant.

Par ailleurs, on notera que l'une des conduites principales (à savoir ici la conduite 8a) comprend une deuxième station de chauffage en surface 18a (couplée à une pompe 20a) raccordée en bout de conduite juste sous la surface de la mer.

En liaison avec les figures 1A à 1C, on décrira maintenant la façon dont les stations de chauffage 14a, 14b et 18a du réseau 2-1 sont pilotées en fonction des différentes phases de fonctionnement du réseau.

La figure 1A montre une phase de fonctionnement normal (dite « opérationnelle ») du réseau de conduites qui consiste à chauffer localement les conduites principales 8a, 8b de façon à maintenir en tout point de celles-ci une température des fluides au-dessus d'un seuil de température prédéterminé.

Pendant cette phase de fonctionnement normal, les stations de chauffage 14a, 14b (et leurs pompes 16a, 16b associées) sont activées en continu (la station de chauffage 18a peut être en revanche désactivée comme représenté en traits pointillés sur la figure).

On notera que seulement deux stations de chauffage judicieusement positionnées sur le réseau peuvent suffire pour maintenir une température des fluides suffisante sur une très grande longueur, par exemple sur une longueur cumulée des conduites principales pouvant atteindre 160km.

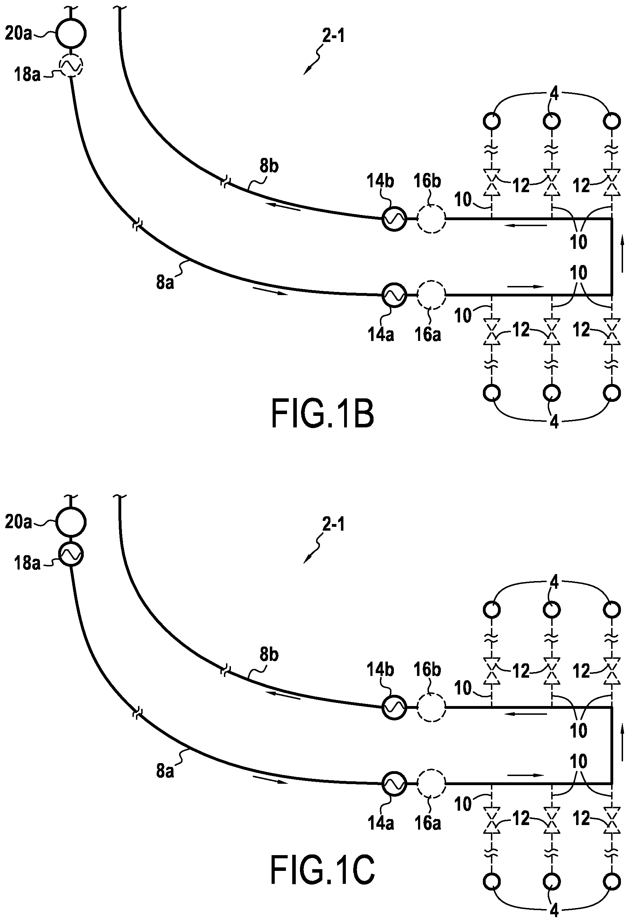

La figure 1B montre une phase de préservation du réseau de conduites sous-marines 2-1. La phase de préservation est une phase au cours de laquelle on interrompt la circulation des fluides, par exemple pour réaliser une opération de maintenance sur le réseau.

Au cours d'une telle phase, les fluides situés en dehors de l'emprise des stations de chauffage 14a, 14b et 18a ne sont plus chauffés et se refroidissent progressivement, avec le risque que cela comporte d'aboutir à la formation de dépôts dans les conduites principales.

Aussi, le procédé de gestion du chauffage des fluides prévoit, en phase de préservation, de couper l'arrivée des fluides en provenance des puits de production 4 en fermant les conduites secondaires 10 (par fermeture des vannes 12), de maintenir activées les stations de chauffage 14a, 14b et d'injecter un fluide traité qui ne fige pas à froid, typiquement du gasoil.

A cet effet, les pompes 16a, 16b associées aux stations de chauffage 14a, 14b sont arrêtées et du fluide traité est injecté depuis un réservoir de l'installation de surface via la conduite principale 8a en actionnant la pompe 20a associée à la station de chauffage en surface 18a (qui est désactivée). Ce fluide traité va venir purger de tous fluides les conduites principales en chassant ces fluides vers l'installation de surface via la conduite principale 8b.

Le fluide traité remplit ainsi la boucle de circulation formée par les conduites principales 8a, 8b. Une fois cette boucle de circulation remplie par le fluide traité, les stations de chauffage 14a, 14b peuvent être arrêtées (le chauffage du fluide traité n'étant pas nécessaire du fait qu'il ne fige pas à froid).

La figure 1C montre une phase de redémarrage du réseau de conduites sous-marines 2-1. Cette phase de redémarrage fait typiquement suite à une phase de préservation telle que décrite précédemment.

Au cours de cette phase de redémarrage, le procédé de gestion du chauffage des fluides comprend la réactivation de toutes les stations de chauffage 14a, 14b, 18a (dont la station de chauffage en surface 18a), les conduites secondaires 10 étant maintenues fermées. Les stations de chauffage permettent ainsi de chauffer le fluide traité circulant dans la boucle de circulation de façon à réchauffer les conduites principales 8a, 8b. Une fois ces dernières réchauffées, les conduites secondaires 10 sont progressivement ouvertes (en ouvrant les vannes 12) de sorte à permettre un redémarrage de la production.

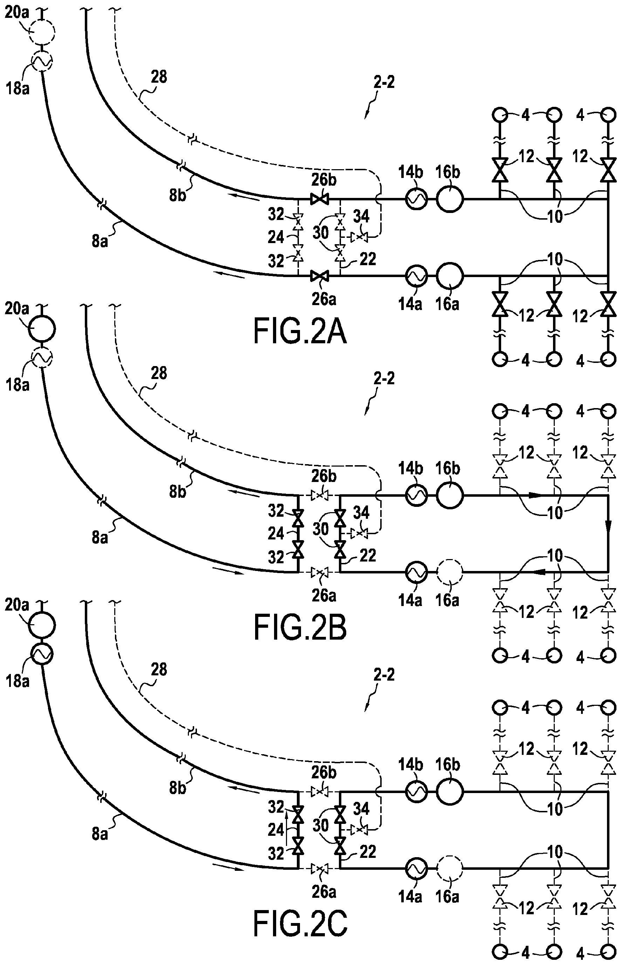

En liaison avec les figures 2A à 2D, on décrira maintenant une architecture de réseau de conduites sous-marines 2-2 selon un mode de réalisation de l'invention dit à « double boucle ».

Ce réseau de conduites 2-2 se distingue de celui décrit précédemment notamment en ce qu'il comprend en outre deux conduites de raccordement 22, 24 qui permettent de relier entre elles les deux conduites principales 8a, 8b en aval des stations de chauffage 14a, 14b (l'aval et l'amont s'entendent ici par rapport au sens de circulation du fluide dans le réseau en phase de fonctionnement normal de celui-ci).

Le réseau de conduites 2-2 comprend également des vannes 26a, 26b positionnées sur les conduites principales 8a, 8b entre les deux conduites de raccordement 22, 24, ainsi qu'une conduite de service 28 reliant l'installation de surface (non représentée sur les figures) à la conduite de raccordement 22 la plus en amont.

En phase de fonctionnement normal du réseau de conduites 2-2 (figure 2A), le procédé selon l'invention prévoit de chauffer localement les fluides circulant dans les conduites principales 8a, 8b de façon à maintenir en tout point de celles-ci une température des fluides au-dessus d'un seuil de température prédéterminé.

Pendant cette phase de fonctionnement normal, les stations de chauffage 14a, 14b (et leurs pompes 16a, 16b associées) sont ainsi activées en continu (la station de chauffage 18a étant en revanche désactivée). Par ailleurs, les conduites de raccordement 22, 24 sont fermées (par fermeture de vannes 30, 32 positionnées sur ces conduites), de même que la conduite de service 28.

En phase de préservation du réseau de conduites 2-2 (figure 2B), le procédé prévoit, dans un premier temps, de fermer les conduites secondaires 10 (par fermeture des vannes 12) et les conduites principales 8a, 8b entre les conduites de raccordement 22, 24 (en fermant les vannes 26a, 26b).

En parallèle, les conduites de raccordement 22, 24 sont ouvertes (par ouvertures des vannes 30, 32) et la conduite de service 28 reste fermée. Ainsi, les conduites principales du réseau 2-2 forment une double boucle de circulation des fluides transportés, à savoir une boucle amont de circulation en amont de la conduite de raccordement amont 22, et une boucle aval de circulation en aval de la conduite de raccordement aval 24.

Par ailleurs, les stations de chauffage 14a, 14b sont maintenues activées de sorte à maintenir la température des fluides au-dessus d'un seuil de température prédéterminé en tout point de la boucle amont de circulation de fluides. La circulation des fluides dans cette boucle amont est réalisée en actionnant seulement l'une des pompes associées aux stations de chauffage (ici la pompe 16b).

Dans un second temps, un fluide traité qui ne fige pas à froid (par exemple du gasoil) est injecté dans les conduites principales depuis un réservoir de l'installation de surface via la conduite principale 8a en actionnant la pompe 20a associée à la station de chauffage en surface 18a (qui est désactivée). Ce fluide traité va venir purger de tous fluides la boucle aval de circulation de fluides en chassant ces fluides vers l'installation de surface via la conduite principale 8b.

Ainsi, pendant cette phase de préservation, tout risque de formation de dépôts dans les conduites principales peut être écarté ; dans la boucle amont de circulation de fluides par l'activation des stations de chauffage 14a, 14b, et dans la boucle aval par la présence d'un fluide traité qui ne fige pas à froid.

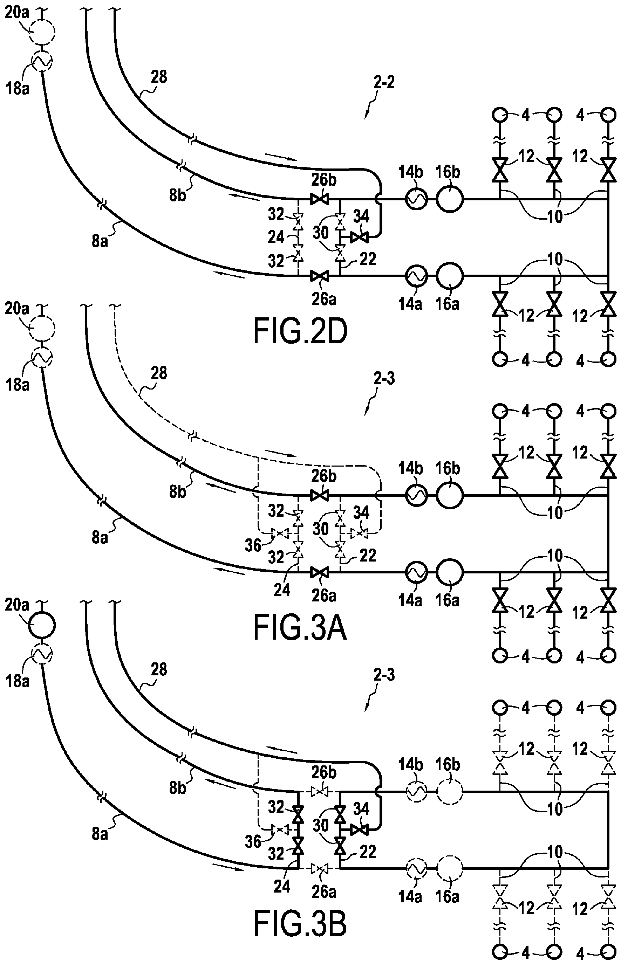

Les figures 2C et 2D illustrent le même réseau de conduites 2-2 lors d'une phase de redémarrage faisant suite à une phase de préservation telle que décrite précédemment.

Au cours de cette phase de redémarrage, le procédé de gestion du chauffage des fluides comprend, dans un premier temps (figure 2C), l'activation de la station de chauffage en surface 18a de sorte à chauffer le fluide traité qui va à son tour chauffer les conduites principales au niveau de la boucle aval de circulation des fluides. Les fluides circulant dans la boucle amont sont toujours chauffés par les autres stations de chauffage 14a, 14b.

Dans un second temps (figure 2D), lorsque les conduites principales au niveau de la boucle aval de circulation des fluides sont suffisamment chaudes, il est prévu d'arrêter l'injection du fluide traité dans les conduites principales 8a, 8b au niveau de la boucle aval de circulation des fluides. Les conduites principales 8a, 8b sont ensuite réouvertes (en ouvrant les vannes 26a, 26b) tandis que les conduites de raccordement 22, 24 sont fermées de sorte à fusionner les boucles amont et aval de circulation de fluides. Les conduites secondaires 10 peuvent alors être progressivement ouvertes (en ouvrant les vannes 12) de sorte à permettre un redémarrage de la production.

Enfin, un fluide (typiquement du méthanol) est injecté par la conduite de service 28 dans la conduite de raccordement amont 22 (en ouvrant une vanne de commande 34) pour éviter la formation d'hydrates dans cette conduite de raccordement.

En liaison avec les figures 3A à 3D, on décrira maintenant une architecture de réseau de conduites sous-marines 2-3 selon un autre mode de réalisation de l'invention également à « double boucle ».

Ce réseau de conduites 2-3 se distingue de celui décrit précédemment notamment en ce que la conduite de service 28 est reliée aux deux conduites de raccordement, à savoir à la conduite de raccordement amont 22 et à la conduite de raccordement aval 24.

Le procédé de gestion du chauffage d'un tel réseau de conduites 2-3 est similaire à celui décrit pour le réseau des figures 2A à 2D.

En particulier, en phase de fonctionnement normal (figure 3A), le procédé selon l'invention prévoit de chauffer localement les conduites principales 8a, 8b de façon à maintenir en tout point de celles-ci une température des fluides au-dessus d'un seuil de température prédéterminé.

Pendant cette phase de fonctionnement normal, les stations de chauffage 14a, 14b (et leurs pompes 16a, 16b associées) sont activées en continu et les conduites de raccordement 22, 24 sont fermées, de même que la conduite de service 28.

Pendant la phase de préservation (figure 3B), le procédé prévoit de fermer les conduites secondaires 10 ainsi que les conduites principales 8a, 8b entre les conduites de raccordement 22, 24, ces dernières étant en revanche ouvertes (par ouverture des vannes 30, 32) de sorte à ce que les conduites principales forment une double boucle de circulation des fluides transportés.

Par rapport au mode de fonctionnement décrit en liaison avec la figure 2B, le procédé comprend en outre de désactiver les stations de chauffage 14a, 14b et de dépressuriser la boucle amont de circulation de fluides en ouvrant la vanne 34 de la conduite de service 28. Cette dépressurisation a pour but d'éviter la formation d'hydrates dans les conduites de la boucle amont de circulation des fluides.

De plus, un fluide traité qui ne fige pas à froid est injecté dans les conduites principales depuis un réservoir de l'installation de surface via la conduite principale 8a en actionnant la pompe 20a associée à la station de chauffage en surface 18a (qui est désactivée). Ce fluide traité va venir purger de tous fluides la boucle aval de circulation de fluides en chassant ces fluides vers l'installation de surface via la conduite principale 8b.

Ainsi, pendant cette phase de préservation, tout risque de formation de dépôts dans les conduites principales peut être écarté ; dans la boucle amont de circulation de fluides par dépressurisation, et dans la boucle aval par la présence d'un fluide traité qui ne fige pas à froid.

La phase de redémarrage faisant suite à une phase de préservation est également similaire à celle décrite en liaison avec les figures 2C et 2D.

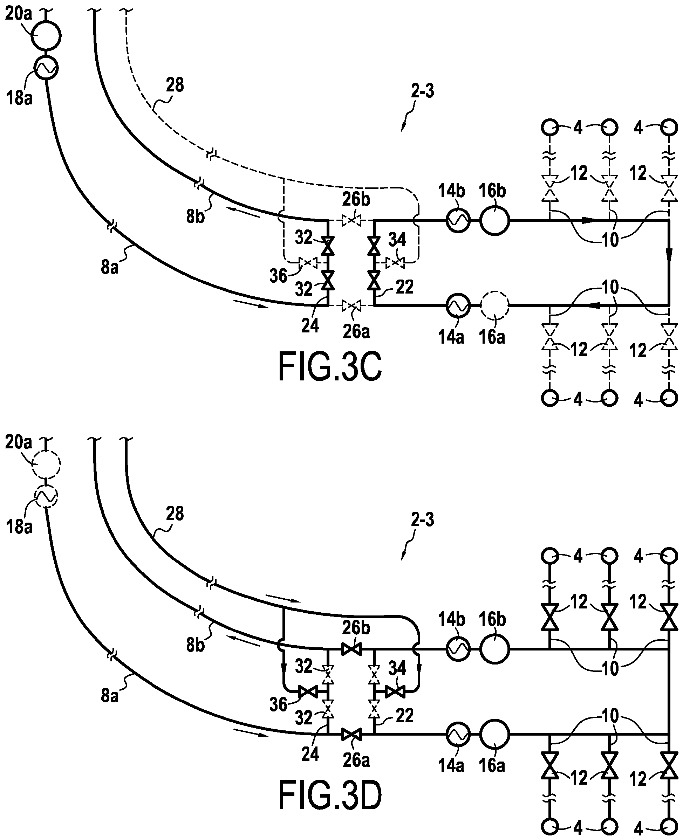

En particulier, le procédé de gestion du chauffage des fluides comprend, dans un premier temps (figure 3C), l'activation de la station de chauffage en surface 18a de sorte à chauffer le fluide traité qui va à son tour chauffer les conduites principales au niveau de la boucle aval de circulation des fluides. Les autres stations de chauffage 14a, 14b sont également réactivées pour chauffer les fluides circulant dans la boucle amont et la dépressurisation de la boucle amont est arrêtée (par fermeture de la vanne 34 de la conduite de service 28).

Lorsque les conduites principales au niveau de la boucle aval de circulation des fluides sont chaudes, l'injection du fluide traité dans les conduites principales 8a, 8b au niveau de la boucle aval de circulation des fluides est arrêtée (figure 3D). Les conduites principales 8a, 8b sont ensuite réouvertes, tandis que les conduites de raccordement 22, 24 sont fermées de sorte à fusionner les boucles amont et aval de circulation de fluides. Les conduites secondaires 10 peuvent alors être progressivement ouvertes (en ouvrant les vannes 12) de sorte à permettre un redémarrage de la production.

Enfin, un fluide (typiquement du méthanol) est injecté par la conduite de service 28 à la fois dans la conduite de raccordement amont 22 (en ouvrant la vanne de commande 34) et dans la conduite de raccordement aval 24 (en ouvrant une vanne de commande 36) de sorte à éviter la formation d'hydrates dans ces conduites de raccordement.

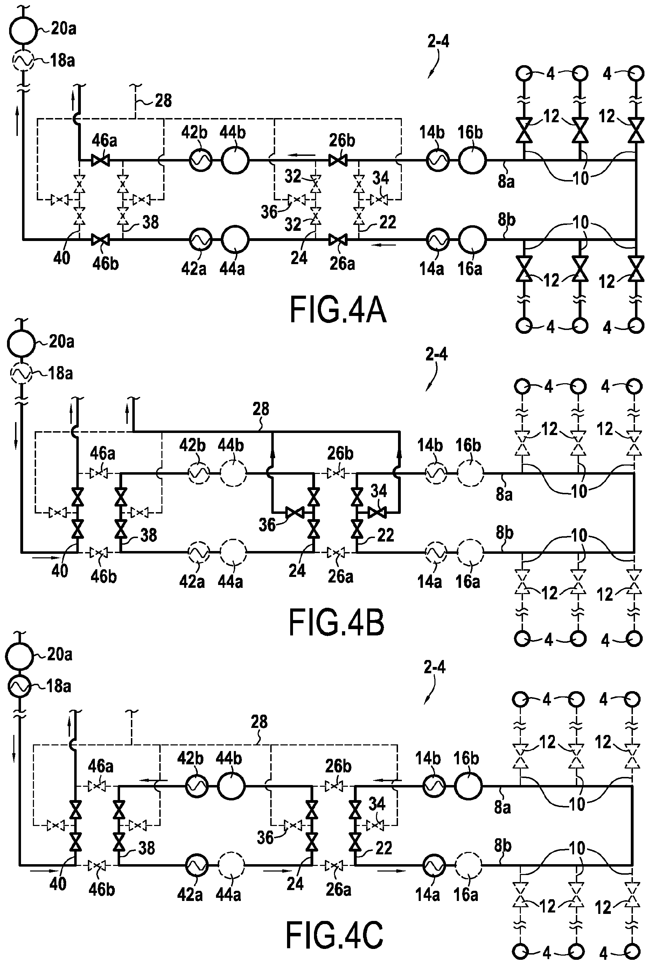

En liaison avec les figures 4A à 4D, on décrira maintenant une architecture de réseau de conduites sous-marines 2-4 selon un mode de réalisation également à « double boucle ».

Ce réseau de conduites 2-4 se distingue de celui décrit précédemment notamment en ce que la conduite de service 28 est raccordée à deux conduites de raccordement supplémentaires 38, 40 positionnées en aval des conduites de raccordement 22, 24 et reliant entre elles les conduites principales 8a, 8b.

Le réseau de conduites 2-4 comprend également des stations de chauffage supplémentaires 42a, 42b (avec leurs pompes respectives 44a, 44b) raccordées respectivement aux conduites principales 8a, 8b entre les conduites de raccordement 22, 24 et les conduites de raccordement supplémentaires 38, 40.

Le réseau de conduites 2-4 comprend encore des vannes 46a, 46b positionnées sur les conduites principales 8a, 8b entre les deux conduites de raccordement supplémentaires 38, 40.

Le procédé de gestion du chauffage d'un tel réseau de conduites 2-4 est le suivant.

En phase de fonctionnement normal (figure 4A), le procédé prévoit de chauffer localement les conduites principales 8a, 8b de façon à maintenir en tout point de celles-ci une température des fluides au-dessus d'un seuil de température prédéterminé.

Pendant cette phase de fonctionnement normal, les stations de chauffage 14a, 14b (et leurs pompes 16a, 16b associées), ainsi que les stations de chauffage supplémentaires 42a, 42b (avec leurs pompes respectives 44a, 44b), sont activées en continu et les conduites de raccordement 22, 24, 38, 40 sont fermées, de même que la conduite de service 28. Ainsi, les conduites principales 8a, 8b sont chauffées localement de façon à maintenir en tout point de celles-ci une température des fluides au-dessus d'un seuil de température prédéterminé.

En phase de préservation (figure 4B), le procédé prévoit de fermer les conduites secondaires 10 (par fermeture des vannes 12) ainsi que les conduites principales 8a, 8b à la fois entre les conduites de raccordement 22, 24 (par fermeture des vannes 26a, 26b), et entre les conduites de raccordement supplémentaires 38, 40 (par fermeture des vannes 46a, 46b).

Les conduites de raccordement 22, 24, 38 et 40 sont en revanche ouvertes de sorte à ce que les conduites principales forment une double boucle de circulation des fluides transportés (une boucle amont en amont de la conduite de raccordement amont 22, et une boucle aval de circulation entre la conduite de raccordement aval 24 et la conduite de raccordement supplémentaire 38).

Les stations de chauffage 14a, 14b et les stations de chauffage supplémentaires 42a, 42b sont désactivées (ainsi que leurs pompes associées) et les boucles amont et aval sont dépressurisées en ouvrant les vannes 34 et 36 de la conduite de service 28. Cette dépressurisation a pour but d'éviter la formation d'hydrates dans les conduites des boucles amont et aval de circulation des fluides.

Un fluide traité qui ne fige pas à froid est également injecté dans les conduites principales depuis un réservoir de l'installation de surface via la conduite principale 8a en actionnant la pompe 20a associée à la station de chauffage en surface 18a (qui est désactivée). Ce fluide traité va venir purger de tous fluides la boucle de circulation de fluides (appelée « boucle de riser ») qui est située en aval de la boucle aval en chassant ces fluides vers l'installation de surface via la conduite principale 8b.

Ainsi, pendant cette phase de préservation, tout risque de formation de dépôts dans les conduites principales peut être écarté : dans les boucles amont et aval de circulation de fluides par dépressurisation, et dans la boucle de riser par la présence d'un fluide traité qui ne fige pas à froid.

La phase de redémarrage faisant suite à une phase de préservation se déroule de la manière suivante.

Le procédé de gestion du chauffage des fluides comprend, dans un premier temps (figure 4C), l'activation de la station de chauffage en surface 18a de sorte à chauffer le fluide traité qui va à son tour chauffer les conduites principales au niveau de la boucle de riser. Les stations de chauffage 14a, 14b et 42a, 42b sont également réactivées pour chauffer les fluides circulant dans les boucles amont et aval de circulation des fluides. La dépressurisation des boucles amont et aval est arrêtée (par fermeture des vannes 34 et 36 de la conduite de service 28).

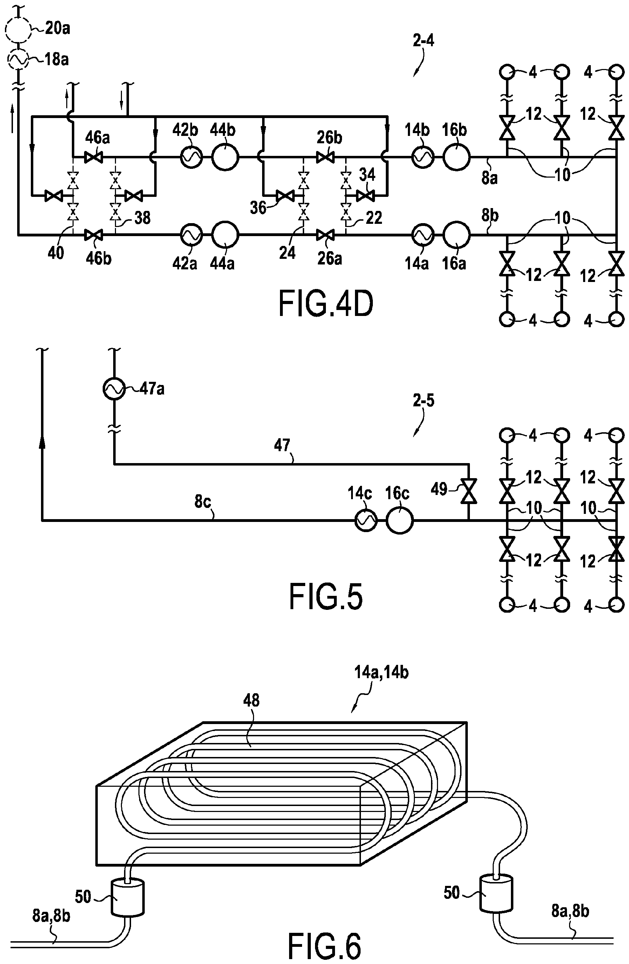

Lorsque les conduites principales 8a, 8b sont chaudes, l'injection du fluide traité dans la boucle de riser est arrêtée (figure 4D). Les conduites principales 8a, 8b sont ensuite réouvertes, tandis que les conduites de raccordement 22, 24 et 38, 40 sont fermées de sorte à fusionner entre elles les boucles amont et aval de circulation de fluides et la boucle de riser. Les conduites secondaires 10 peuvent alors être progressivement ouvertes (en ouvrant les vannes 12) de sorte à permettre un redémarrage de la production.

Enfin, un fluide (typiquement du méthanol) est injecté par la conduite de service 28 dans les conduites de raccordement 22, 24 et 38, 40 pour prévenir la formation d'hydrates dans ces conduites.

En liaison avec la figure 5, on décrira maintenant une architecture de réseau de conduites sous-marines 2-5 selon un mode de réalisation dit à « boucle hybride ».

Dans ce mode de réalisation, le réseau 2-5 comprend une conduite de production 8c raccordée à l'installation de surface (non représentée sur la figure 5), une pluralité de conduites secondaires 10 reliant des puits de production 4 à la conduite de production, et une conduite de service 47 reliée à la conduite de production 8c en aval des conduites secondaires 10.

Un tel réseau 2-5 peut être utilisé pour le transport de fluides sur de longues distances. Dans ce cas, le procédé selon l'invention est similaire à ceux décrits précédemment, à savoir qu'il comprend le raccordement de la conduite de production 8c à une station de chauffage 14c de fluides positionnée en aval d'un raccordement avec la conduite de service 47.

En phase de fonctionnement normal, cette station de chauffage 14c (et sa pompe associée 16c) est activée pour maintenir la température des fluides au-dessus d'un seuil de température prédéterminé en tout point du réseau (la conduite de service 47 étant fermée par fermeture d'une vanne 49 prévue sur celle-ci).

En phase de préservation, les conduites secondaires 10 sont fermées (par fermeture des vannes 12 associées) et la conduite de service 47 est ouverte. Un fluide traité (typiquement du gasoil) est injecté depuis l'installation de surface dans la conduite de production 8c pour purger celle-ci des fluides qu'elle contient avant d'arrêter la station de chauffage 14c une fois la conduite principale purgée.

Enfin, en phase de redémarrage, le fluide traité circulant dans la conduite de service 47 est chauffé par un système conventionnel de chauffage 47a (situé dans l'installation de surface) de sorte à chauffer par transmission la conduite de production 8c. Lorsque celle-ci est suffisamment chaude, l'injection du fluide traité est arrêtée et les conduites secondaires 10 sont progressivement ouvertes (en ouvrant les vannes 12) de sorte à permettre un redémarrage de la production.

Alternativement, le réseau de conduites sous-marines 2-5 selon ce cinquième mode de réalisation peut être utilisé pour le chauffage en pied de « riser » (i.e. en pied d'une conduite utilisée pour relier le fond de la mer à l'installation en surface). Dans ce cas, la station de chauffage 14c est activée uniquement pendant les phases de fonctionnement normal.

Encore alternativement, le réseau de conduites sous-marines 2-5 selon ce cinquième mode de réalisation peut être utilisé pour le transport de fluides sur des distances plus courtes mais à très grande profondeur. Dans cas, le réseau comprend en outre une autre station de chauffage en pied de riser qui est activée aussi en phase de préservation.

En liaison avec les figures 6 à 9, on décrira maintenant différentes caractéristiques des stations de chauffage pour la mise en œuvre du procédé selon l'invention.

Ces stations de chauffage correspondent à celles décrites ci-avant dans les différents modes de réalisation des réseaux de conduites sous-marines.

Comme représenté sur la figure 6, la station de chauffage 14a, 14b peut comprendre un conduit 48 qui est enroulé en spirales à l'intérieur de la station de chauffage et qui est chauffé (par exemple par induction électromagnétique). L'encombrement au sol de ces stations de chauffage est ainsi faible.

Dans le mode de réalisation de la figure 6, ne faisant pas partie de l'étendue de la protection, la station de chauffage 14a, 14b est raccordée directement à une conduite sous-marine 8a, 8b, par exemple au moyen de vannes 50.

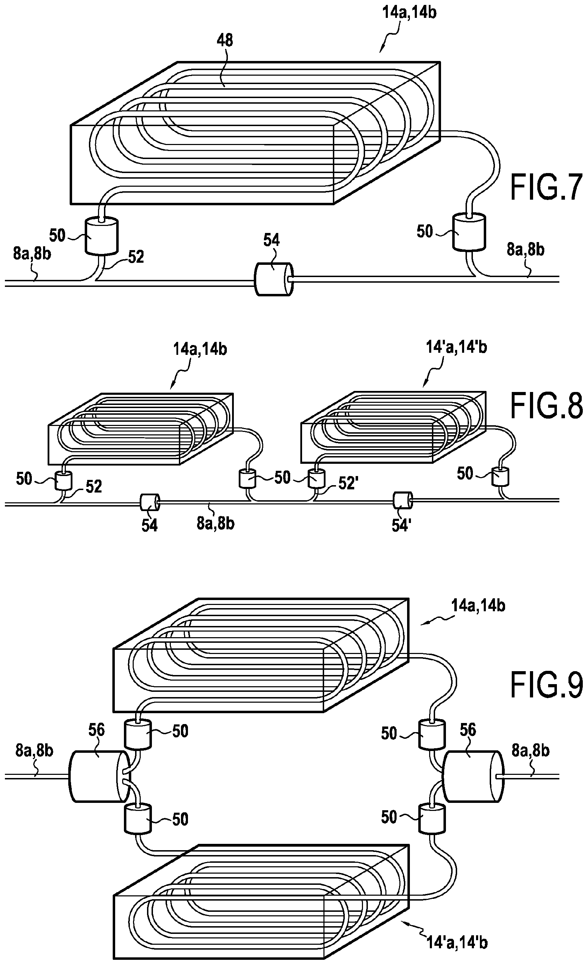

Dans le mode de réalisation de la figure 7, la station de chauffage 14a, 14b est raccordée à une conduite sous-marine 8a, 8b, au moyen d'une conduite de contournement 52 (ou conduite « by-pass ») reliée à la conduite sous-marine correspondante par des vannes 50. De plus, la conduite sous-marine est équipée d'une vanne de contournement 54.

Dans le mode de réalisation de la figure 8, la conduite sous-marine 8a, 8b est raccordée à deux stations de chauffage 14a, 14b ; 14'a, 14'b installées en série sur le principe de raccordement de la figure 7 (par l'intermédiaire de conduites de contournement 52, 52' et le recours à des vannes de contournement 54, 54').

Ce mode de réalisation prévoit ainsi une redondance des stations de chauffage dans lequel chaque station de chauffage est capable d'assurer seule le chauffage voulu des fluides transportés. En temps normal, une seule de ces deux stations de chauffage est utilisée ou les deux le sont à mi-puissance. Si l'une des stations de chauffage est retirée, l'autre station prend le relais.

Dans la variante de réalisation de la figure 9, ne faisant pas partie de l'étendue de la protection, la conduite sous-marine 8a, 8b est raccordée à deux stations de chauffage 14a, 14b ; 14'a, 14'b installées en parallèle avec la présence en amont et en aval des stations de chauffage de dispositifs 56 permettant d'assurer un aiguillage d'un racleur destiné à racler les éventuels dépôts des parois.

## Revendications

1. Procédé de gestion du chauffage de fluides circulant dans un réseau de conduites sous-marines (2-2 ; 2-3 ; 2-4) assurant une liaison entre une installation de surface (6) et au moins un puits de production sous-marin (4), le réseau de conduites sous-marines comprenant :
deux conduites principales (8a, 8b) reliées entre elles au fond de la mer et raccordées chacune à l'installation de surface (6) de sorte à former au moins une boucle de circulation de fluides;
une pluralité de conduites secondaires (10) reliant des puits de production (4) aux deux conduites principales (8a, 8b);
le procédé comprenant le raccordement d'au moins une station de chauffage (14a, 14b) de fluides à chaque conduite principale en aval des conduites secondaires au moyen d'une conduite de contournement (52) reliée à la conduite principale, et l'activation des stations de chauffage en phase de fonctionnement normal du réseau de conduites pour maintenir la température des fluides au-dessus d'un seuil de température prédéterminé en tout point du réseau ;
le réseau de conduites sous marines (2-2 ; 2-3 ; 2-4) comprenant en outre deux conduites de raccordement (22, 24) reliant les deux conduites principales (8a, 8b) entre elles en aval des stations de chauffage (14a, 14b);
le procédé comprenant en outre, en phase de préservation du réseau de conduites sous-marines :
la fermeture des conduites secondaires et des conduites principales entre les deux conduites de raccordement avec l'ouverture de ces dernières, et l'activation des stations de chauffage pour maintenir la température des fluides au-dessus d'un seuil de température prédéterminé en tout point d'une boucle amont de circulation de fluides ; et
l'injection d'un fluide traité dans les conduites principales d'une boucle aval de circulation de fluides pour purger les fluides qu'elle contient.

2. Procédé selon la revendication 1, dans lequel en phase de redémarrage du réseau de conduites sous-marines faisant suite à une phase de préservation, le procédé comprend :
l'arrêt de l'injection dans les conduites principales de la boucle aval de circulation de fluides d'un fluide traité ;
la réouverture des conduites principales entre les conduites de raccordement ;
la fermeture des deux conduites de raccordement pour fusionner entre elles les boucles amont et aval de circulation de fluides ;
l'injection de méthanol dans au moins l'une des conduites de raccordement pour prévenir la formation d'hydrates dans celle-ci ; et
la réouverture progressive des conduites secondaires pour redémarrer la production.

3. Procédé selon la revendication 1, dans lequel, en phase de préservation du réseau de conduites sous-marines, le procédé comprend l'arrêt des stations de chauffage et la dépressurisation de la boucle amont de circulation de fluides pour éviter la formation d'hydrates dans cette boucle amont.

4. Procédé selon l'une quelconque des revendications 1 à 3, dans lequel au moins l'une des conduites principales (8a, 8b) est raccordée à au moins deux stations de chauffage (14a, 14b) installées en série ou en parallèle.

## Patentansprüche

1. Verfahren zur Steuerung der Erwärmung von Fluiden, die in einem Netz aus Unterwasserrohrleitungen (2-2; 2-3; 2-4) zirkulieren, welche eine Verbindung zwischen einer Oberflächenanlage (6) und wenigstens einer Unterwasserförderbohrung (4) sicherstellen, wobei das Netz aus Unterwasserrohrleitungen umfasst:
zwei Hauptrohrleitungen (8a, 8b), die am Meeresgrund untereinander verbunden sind und jeweils an die Oberflächenanlage (6) angeschlossen sind, um wenigstens eine Fluidzirkulationsschleife zu bilden,
eine Vielzahl von Nebenrohrleitungen (10), welche Förderbohrungen (4) mit den beiden Hauptrohrleitungen (8a, 8b) verbinden,
wobei das Verfahren das Verbinden von wenigstens einer Station zum Aufheizen (14a, 14b) von Fluiden mit jeder Hauptrohrleitung stromabwärts der Nebenrohrleitungen mittels einer Umgehungsrohrleitung (52), welche mit der Hauptrohrleitung verbunden ist, sowie das Aktivieren der Heizstationen in normaler Betriebsphase des Rohrleitungsnetzes umfasst, um die Temperatur der Fluide an jeder Stelle des Netzes oberhalb eines vorbestimmten Temperaturschwellwertes zu halten,
wobei das Netz aus Unterwasserrohrleitungen (2-2; 2-3; 2-4) ferner zwei Verbindungsrohrleitungen (22, 24) umfasst, welche die beiden Hauptrohrleitungen (8a, 8b) stromabwärts der Heizstationen (14a, 14b) untereinander verbinden,
wobei das Verfahren ferner in der Erhaltungsphase des Netzes aus Unterwasserrohrleitungen umfasst:
das Schließen der Nebenrohrleitungen und der Hauptrohrleitungen zwischen den beiden Verbindungsrohrleitungen mit deren Öffnen, sowie das Aktivieren der Heizstationen, um die Temperatur der Fluide an jeder Stelle einer stromaufwärtigen Fluidzirkulationsschleife oberhalb eines vorbestimmten Temperaturschwellwertes zu halten, und
das Einspritzen eines behandelten Fluids in die Hauptrohrleitungen einer stromabwärtigen Fluidzirkulationsschleife, um die in ihr enthaltenen Fluide abzuführen.

2. Verfahren nach Anspruch 1, wobei das Verfahren in der Wiederanlaufphase des Netzes aus Unterwasserrohrleitungen, die auf eine Erhaltungsphase folgt, umfasst:
das Stoppen des Einspritzens eines behandelten Fluids in die Hauptrohrleitungen der stromabwärtigen Fluidzirkulationsschleife,
das Wiedereröffnen der Hauptrohrleitungen zwischen den Verbindungsrohrleitungen,
das Verschließen der beiden Verbindungsrohrleitungen, um die stromaufwärtige und die stromabwärtige Fluidzirkulationsschleife zusammenzuführen,
das Einspritzen von Methanol in wenigstens eine der Verbindungsrohrleitungen, um der Bildung von Hydraten in dieser vorzubeugen, und
das schrittweise Wiedereröffnen der Nebenrohrleitungen, um die Produktion wieder zu starten.

3. Verfahren nach Anspruch 1, wobei in der Erhaltungsphase des Netzes aus Unterwasserrohrleitungen das Verfahren das Anhalten der Heizstationen sowie die Druckentlastung der stromaufwärtigen Fluidzirkulationsschleife umfasst, um die Bildung von Hydraten in dieser stromaufwärtigen Schleife zu vermeiden.

4. Verfahren nach einem der Ansprüche 1 bis 3, bei dem wenigstens eine der Hauptrohrleitungen (8a, 8b) mit wenigstens zwei in Reihe oder parallel geschalteten Heizstationen (14a, 14b) verbunden ist.

## Claims

1. A method of managing the heating of fluids flowing in an undersea pipe network (2-2; 2-3; 2-4) providing a connection between a surface installation (6) and at least one undersea production well (4), the undersea pipe network comprising:
two main pipes (8a, 8b) connected together at the sea bottom and each connected to a surface installation (6) so as to form at least one fluid circulation loop;
a plurality of secondary pipes (10) connecting production wells (4) to the two main pipes (8a, 8b);
the method comprising connecting at least one fluid heater station (14a, 14b) to each main pipe downstream from the secondary pipes by means of a bypass pipe (52) connected to the main pipe, and activating the heater stations in a stage of normal operation of the pipe network in order to maintain the fluids at all points of the network at a temperature higher than a predetermined temperature threshold;
the pipe network (2-2; 2-3; 2-4) further comprising two connection pipes (22, 24) connecting together the two main pipes (8a, 8b) downstream from the heater stations (14a, 14b);
the method further comprising, in a preservation stage of the undersea pipe network:
closing the secondary pipes and the main pipes between the two connection pipes while opening the connection pipes, and activating the heater stations in order to maintain the fluids at all points in an upstream fluid circulation loop at a temperature higher than a predetermined temperature threshold; and
injecting a processed fluid into the main pipes of a downstream fluid circulation loop in order to purge the fluids it contains.

2. A method according to claim 1, wherein, in a stage of restarting the undersea pipe network following a preservation stage, the method comprises:
stopping injection of a processed fluid into the main pipes of the downstream fluid circulation loop;
reopening the main pipes between the connection pipes;
closing the two connection pipes so as to merge together the upstream and downstream fluid circulation loops;
injecting methanol into at least one of the connection pipes in order to prevent hydrates forming therein; and
reopening the secondary pipes progressively in order to restart production.

3. A method according to claim 1, wherein, in a stage of preserving the undersea pipe network, the method comprises stopping the heater stations and depressurizing the upstream fluid circulation loop in order to avoid hydrates forming in the upstream loop.

4. A method according to any one of claims 1 to 3, wherein at least one of the undersea pipes (8a, 8b) is connected to at least two heater stations (14a, 14b) installed in series or in parallel.
